# EUROPEAN PATENT SPECIFICATION

(11) **EP 3 260 596 B1**
(45) Date of publication and mention of the grant of the patent: **31.10.2018**
(21) Application number: 16175911.3
(22) Date of filing: 23.06.2016
(51) Int. Cl.: D21B 1/32, D21D 5/24

(54) **DEASHING SYSTEM AND DEASHING METHOD**
ENTASCHUNGSSYSTEM UND ENTASCHUNGSVERFAHREN
PROCÉDÉ DE DÉCENDRAGE ET SYSTÈME DE DÉCENDRAGE

(43) Date of publication of application: 27.12.2017
(73) Proprietor: Valmet Technologies Oy, 02150 Espoo (FI)
(72) Inventor: AHOLA, Jussi, 33101 Tampere (FI)
(74) Representative: Berggren Oy, Helsinki & Oulu

(56) References cited:
- DE-B1- 2 836 186

## Description

The invention relates generally to producing fiber webs. Particularly the invention relates to a deashing system for a containerboard or cartonboard line according to the preamble of claim 1 and to a deashing method for containerboard or cartonboard according to the preamble of claim 7.

As known from the prior art in fiber web machines, especially in paper and board machines, the fiber web is produced and treated in an assembly formed by a number of apparatuses arranged consecutively in a process line. A typical production and treatment line comprises a forming section comprising a head box and a forming unit and a press section as well as a subsequent drying section and a reel-up. The production and treatment line can further comprise other devices and sections for finishing the fiber web, for example, a size press, a calender, a coating section. The production and treatment line also comprises typically at least one winder for forming customer rolls as well as a roll packaging apparatus. In this description and the following claims by fiber webs are meant especially containerboard or cartonboard webs.

In DE patent publication 2836186 is disclosed a process for removing the ash from fibrous stock suspensions when processing waste-paper by means of a separation process with subsequent clarification of the ash-laden water, in which the fibrous stock suspension is subjected to a sorting process via a sorting strainer and the ash and a short-fiber portion is passed through the strainer and thereafter separation into ash and fibers is effected, while the pulp stock remaining in front of the sorting strainer is conducted away for further processing.

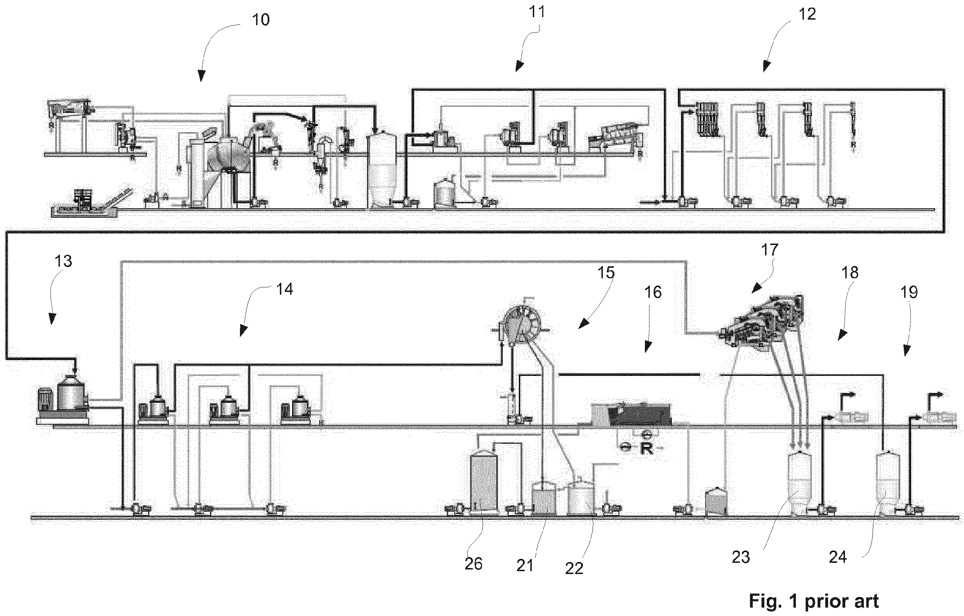

Before the head box pulp and recycled fiber are treated to be fed into the head box to be used to produce the fiber web. As shown in an example of prior art presented in figure 1 the treatment system of the pulp and recycled fiber comprises a pulping section 10 followed by coarse screening section 11, after which the centrifugal cleaning section 12 is located. The centrifugal cleaning is followed by fractionation section 13, at which short fiber content is typically 50-70% and long fiber content is typically 30-50% for container board stock. Short fiber stock is lead to short fiber deashing washers 17 and long fiber stock is lead to long fiber fine screening system 14 and after the long fiber fine screening system 14 to long fiber thickening system 15, from which filtrates are led to filtrate tanks 21, 22 and long fiber stock to long fiber tank 24. From the short fiber deashing washers 17 short fiber stock is led to a short fiber tank 23 and filtrate waters to white water tank 26 via a short fiber deashing microflotation system 16. From the short fiber tank 23 the short fiber stock is led to a short fiber refining system 18 and from the long fiber tank 24 the long fiber stock is led to a long fiber system 19. In treatment of the pulp and the recycled fibers after the cleaned stock is thickened for increasing strength of the fiber web to be produced. Recycled fiber stock has typically a large content of ash, which decreases the strength and is thus to be removed by deashing devices in the centrifugal cleaning system 12 and by the short fiber deashing washers 17. In the prior art systems basically all the pulp and recycled fiber stock to be led to the head box is treated and washed such that ash content is reduced to acceptable level in the various deashing systems. This leads often to over-dimensioned deashing washer capacity as most of the ash removed is to be returned to processing.

In processing of the recycled fiber stock the deashing is a conflicting practice as the ash has the strength decreasing effect but on the other hand the ash is needed for savings in stock weight values. The actual need of decreasing the ash concentration is typically only 1-3% thus in prior art systems a lot of capacity is used to first deashing and to secondly returning the ash to the processing, which amounts to need of increased capacity by double processing and thus to increasing of cost of the system.

An object of the invention is to create a deashing system and method, in which the disadvantages and problems of prior art are eliminated or at least minimized.

In particular an object of the invention is to provide a new type of deashing system and method in which capacity need is decreased and thus cost savings achieved.

In order to achieve the above mentioned objects the deashing system according to the invention is mainly characterized by the features of the characterizing clause of claim 1. The deashing method according to the invention in turn is mainly characterized by the features of the characterizing clause of claim 7. Advantageous embodiments and features are disclosed in the dependent claims.

According to the invention the deashing system for a recycled fiber stock comprising means for fractionating and washing the recycled fiber stock, wherein the means for fractionate the recycled fiber stock comprises a first and second treatment devices, wherein the first treatment device divides the recycled fiber stock into accept and reject fractions, which accept fraction is led forward in the system and which reject fraction is led to the second treatment device, and wherein the second treatment device divides that stock into accept and reject fractions, which accept fraction is led to a washer for removing ash from the stock, and wherein the washed stock is mixed with the accept fraction coming from the first treatment device.

According to an advantageous feature of the invention the first and second treatment devices are centrifugal cleaners.

According to an advantageous feature of the invention the washer comprises two fabrics, through which ash is removed from the stock, advantageously the washer is a twin wire washer.

According to an advantageous feature of the invention from the second treatment device the reject fraction is led to a third treatment device and the accept fraction of the third treatment device is led to the second treatment device feed end or into connection to the accept fraction coming from the second treatment device towards the washer.

According to an advantageous feature of the invention the deashing system further comprises at least a fourth treatment device.

According to an advantageous feature of the invention the third and the fourth and possible further treatment devices are centrifugal cleaners.

According to an advantageous feature of the invention the deashing system is between a coarse screening section and a fractionation section.

According to an advantageous feature of the invention the deashing system is in the centrifugal cleaning system area.

In the method of deashing a recycled fiber stock in a deashing system according to the invention a stock formed of fiber, fines, sand and ash and water is fed into means for fractionate the recycled fiber stock comprising a first and second treatment devices, wherein the first treatment device divides the recycled fiber stock into accept and reject fractions, which accept fraction is led forward in the system and which reject fraction is led to the second treatment device, wherein the second treatment device divides that stock into accept and reject fractions, which accept fraction is led to a washer for removing ash from the stock, and wherein the washed stock is mixed with the accept fraction coming from the first treatment device.

In the deashing system according to the invention and its advantageous features in different stages of threating the accept fraction coming from the second treatment device by the washer it is possible to achieve required ash content reduction. Accept fraction coming from the first treatment device and washed stock from the washer are combined and the ash content level of combined stock is reduced to acceptable level and can be forwarded in the process towards the fiber web machine.

As is clear from the above by the deashing system according to the invention many advantages are achieved. In the deashing system smaller centrifugal cleaning system can be used and in the second stage high concentration of ash, coarser fibers, increased washer capacity and easier sticky removals is achieved as well as higher fiber feed concentration and easy fine sand removal are achieved. The accept stock from the washer is ready to be used in the further production of the fiber web and no additional processing is needed and the accept stock from the washer is also in higher concentration and thus the dimensioning of devices of further processing is advantageous, for example the dimensioning can be decreased also for the fractionation devices as the stock amount to be treated is smaller. Invention reduces also energy consumption of the recycled fiber stock system.

Deashing system and deashing method are particularly suitable for processing OCC (old corrugated carton) based raw material.

In the following the invention is explained in detail with reference to the accompanying drawing to which the invention is not to be narrowly limited.

In figure 1 is shown schematically an example of a deashing system according to prior art in connection with a pulp and recycled fiber treatment system for container board.

In figure 2 is shown schematically an advantageous example of a deashing system according to the invention in connection with a pulp and recycled fiber treatment system for containerboard.

In figure 3 is shown very schematically an advantageous example of a deashing system according to the invention.

During the course of the following description like numbers and signs will be used to identify like elements according to the different views which illustrate the invention and its advantageous examples. In the figures some repetitive reference signs have been omitted for clarity reasons. In the figures rolls and cylinders provided with a drive are denoted by a black center circle.

In figure 1 an example of a deashing system according to prior art is shown, in which the treatment system of the pulp and recycled fiber comprises a pulping section 10 followed by coarse screening section 11, after which a centrifugal cleaning section 12 is located. The centrifugal cleaning is followed by a fractionation section 13, at which short fiber content is typically 50-70% and long fiber content is typically 30-50% for container board stock. Short fiber stock is lead to short fiber deashing washers 17 and long fiber stock is lead to a long fiber fine screening section 14 and after the long fiber fine screening section 14 to a long fiber thickening system 15, from which filtrates are led to filtrate tanks 21, 22 and long fiber stock to a long fiber tank 24. From the short fiber deashing washers 17 short fiber stock is led to a short fiber tank 23 and filtrate waters to a white water tank 26 via a short fiber deashing microflotation system 16. From the short fiber tank 23 the short fiber stock is led to a short fiber refining system 18 and from the long fiber tank 24 the long fiber stock is led to a long fiber system 19. In treatment of the pulp and the recycled fibers after the cleaned stock is thickened for increasing strength of the fiber web to be produced. Recycled fiber stock has typically a large content of ash, which decreases the strength and ash content level is needed to be decreased by deashing devices in the centrifugal cleaning system 12 and by the short fiber deashing washers 17. In the pulping section 10 recycled fiber bales are break down into individual fibers as much as possible to form a suspension that can be pumped. Typically in the pulping section 10 is used vertical or drum pulpers. The purpose of screening section 11, 14 is to remove debris and solid contaminants from the recycled fiber stock. This screening section 11, 14 uses appropriate screen configurations according to particle size, shape, and deformability of the contaminants. In the coarse screening 11 the screen openings are bigger than in the fine screening 14. The purpose of centrifugal cleaning 12 is to remove particles from the suspension that affect paper quality or cause excessive wear in subsequent processing machinery. These contaminants may include heavy weight particles such as sand, metal pieces and shiver or light weight particles including plastic.

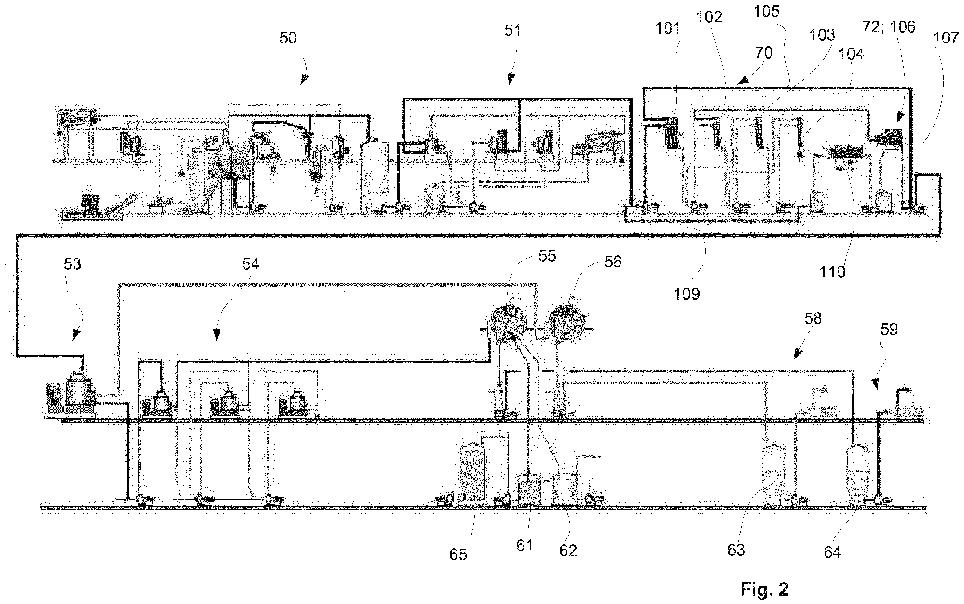

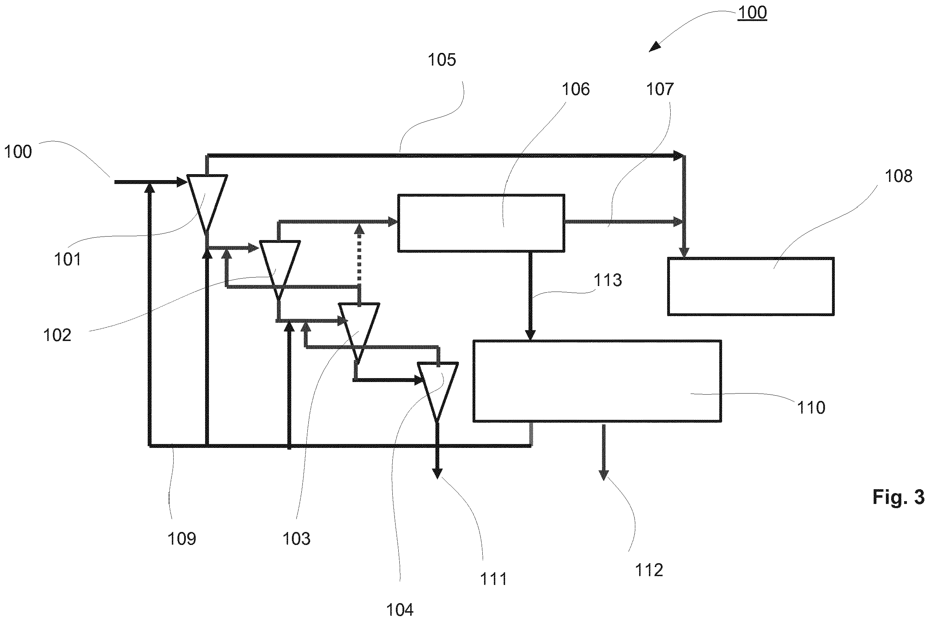

In the example of figures 2-3 an example of a deashing system according to the invention is shown, in which the treatment system of the pulp and recycled fiber comprises a pulping section 50 followed by a coarse screening section 51, after which a centrifugal cleaning section 70; 105 with a deashing washer 72 is located. The deashing system for a recycled fiber stock comprising means for fractionate and wash the recycled fiber stock, which means for fractionate the recycled fiber stock comprises a first and second treatment devices 101, 102, in which the first treatment device 101 divides the recycled fiber stock into accept and reject fractions, in which accept fraction is led forward in the system and reject fraction is led to the second treatment device 102 and the second treatment device 102 divides that stock into accept and reject fractions, in which accept fraction is led to the washer 72; 106 for removing ash from the stock and washed stock is mixed with the accept fraction coming from the first treatment device 101. The centrifugal cleaning system 70 with the deashing washer 72 is followed by a fractionation section 53, at which short fiber content is typically 50-70% and long fiber content is typically 30-50% for container board stock. Advantageously the deashing system 100 is between a coarse screening section 51 and a fractionation section 53. Short fiber stock is led to the short and long fiber thickening system 56. Long fiber stock is lead to a long fiber fine screening system 54 and after the long fiber fine screening system 54 to fiber thickening system 55, from which filtrates are led to filtrate tanks 61, 62 and the long fiber stock to a long fiber tank 64, and the short fiber thickening device 56, from which the short fiber stock is led to a short fiber tank 63. Filtrate waters of the long fiber thickening device 55 are led via the filtrate tanks 61, 62 to the white water tank 65. From the short fiber tank 63 the short fiber stock is led to a short fiber refining system 58 and from the long fiber tank 64 the long fiber stock is led to a long fiber refining system 59. The operation of the centrifugal cleaning system 70 with deashing system 100 including deashing washer 72; 106 is in more detail explained in connection with figure 3. In the pulping section 50 recycled fiber bales are break down into individual fibers as much as possible to form a suspension that can be pumped. Typically in the pulping section 50 is used vertical or drum pulpers. The purpose of screening section 51, 54 is to remove debris and solid contaminants from the recycled fiber stock. This screening section 51, 54 uses appropriate screen configurations according to particle size, shape, and deformability of the contaminants. In the coarse screening 51 the screen openings are bigger than in the fine screening 54. The purpose of centrifugal cleaning 70 is to remove particles from the suspension that affect paper quality or cause excessive wear in subsequent processing machinery. These contaminants may include heavy weight particles such as sand, metal pieces and shiver or light weight particles including plastic and the deashing system is advantageously in the centrifugal cleaning system 70 area.

As shown in figure 3 from a stock inlet 101 recycled fiber stock fraction formed of fiber, fines, sand and ash 1+2 and water is fed to the deashing system 100. In first treatment device 101 the recycled fiber stock fraction is divided to two fractions; accept and reject fractions, the accept fraction consisting of the fiber, fines, ash 1 and water and the reject fraction consisting of ash 2, sand and water. The accept fraction is led to an accept tank 108 via line 105. The reject is lead to a second treatment device 102, in which the stock is divided into accept fraction and reject fraction. The accept fraction comprising ash 2 and water filtrate is treated in the washer 106 and the accept fraction comprising fiber, fine and water of the ash 2 and water filtrate is lead to the accept tank 108 and the reject fraction comprising ash 2 with fines and water 113 is led to a water treatment device 110 comprising for example a microflotation device. It is possible to forward accept fraction (=washed stock) coming from the washer and accept fraction from the first treatment device directly to further processing without tank 108 (according to fig. 2). Recovered fibers are led back to process by line 109 and ash is removed from the process. Thus in the deashing system the stock is treated such that the ash content is divided into two ash part fractions; accept fraction for ash 1 and reject fraction for ash 2, and ash 1 remains in the accept fraction to be lead to the accept tank 108 and thus to be used in the production of the fiber web and ash 2 in the reject fraction is further cleaned to remove sand, fines and water from it and thereafter ash 2 is removed from the process. Ash 1 concentration of the stock to be led to the accept tank 108 is reduced 3%, advantageously 1-2% by which tens of % are achieved in strength improvement of the fiber web. The deashing system for a recycled fiber stock comprising means for fractionate and wash the recycled fiber stock, which means for fractionate the recycled fiber stock comprises a first and second treatment devices 101, 102, in which the first treatment device 101 divides the recycled fiber stock into accept and reject fractions, in which accept fraction is led forward in the system and reject fraction is led to the second treatment device 102 and the second treatment device 102 divides that stock into accept and reject fractions, in which accept fraction is led to the washer 106 for removing ash from the stock and washed stock is mixed with the accept fraction coming from the first treatment device 101. From the second treatment device 102 the reject fraction is led to a third treatment device 103 and the accept fraction of the third treatment device is led to the second treatment device 102 feed end or into connection to the accept fraction of the second treatment device 102 towards the washer 106. The deashing system 100 further comprises at least a fourth treatment device 104. The third 103 and the fourth 104 and possible further treatment devices are centrifugal cleaners. Accept fraction from the fourth treatment device 104 is led to the third treatment device 103 feed end and reject fraction from the fourth treatment device 104 contains mainly sand and other heavy particles which are removed from the process by line 111. Depending on the stock quality, it is possible to arrange deashing system only by two or three treatment devices.

Advantageously consistency of the recycled fiber stock in the centrifugal cleaners process area of the examples of figures 1 - 3 is in LC (low consistency) area.

The washer 106 can be a drum or a gap or a screening washer or a twin wire washer and a wire roll press or pressurized water removal can be used. The water treatment device 110 can comprise a microflotation device.

Above only some advantageous examples of the inventions has been described to which examples the invention is not to be narrowly limited and many modifications and alterations are possible within the scope of the claims.

## Claims

1. Deashing system (100) for a recycled fiber stock comprising means for fractionating and washing the recycled fiber stock, wherein the means for fractionating the recycled fiber stock comprises a first treatment device (101), which divides the recycled fiber stock into accept and reject fractions, which accept fraction is led forward in the system, **characterized in that** the means for fractionating the recycled fiber stock further comprises a second treatment device (102), to which the reject fraction is led to, and that the second treatment device (102) divides that stock into accept and reject fractions, which accept fraction is led to a washer (72; 106) for removing ash from the stock, and that the washed stock is mixed with the accept fraction coming from the first treatment device (101).

2. Deashing system (100) according to claim 1, **characterized in that** the first and second treatment devices are centrifugal cleaners.

3. Deashing system (100) according to claim 1 or 2, **characterized in that** the washer (72, 106) comprises two fabrics, through which ash is removed from the stock, and that advantageously the washer is a twin wire washer.

4. Deashing system (100) according to any of claims 1-3, **characterized in that** from the second treatment device (102) the reject fraction is led to a third treatment device (103) and the accept fraction of the third treatment device is led to the second treatment device (102) feed end or into connection to the accept fraction coming from the second treatment device (102) towards the washer (106).

5. Deashing system (100) according to any of claims 1-4, **characterized in that** the deashing system (100) further comprises at least a fourth treatment device.

6. Deashing system (100) according to claim 5, **characterized in that** the third and the fourth and possible further treatment devices are centrifugal cleaners.

7. Method of deashing a recycled fiber stock in a deashing system, in which method a stock formed of fiber, fines, sand and ash and water is fed to means for fractionating the recycled fiber stock comprising a first treatment device (101), which first treatment device (101) divides the recycled fiber stock into accept and reject fractions, which accept fraction is led forward in the system, **characterized in that** the means for fractionating the recycled fiber stock further comprise a second treatment device (102), to which the reject fraction is led and which second treatment device (102) divides that stock into accept and reject fractions, which accept fraction is led to a washer (72;106) for removing ash from the stock, and that the washed stock is mixed with the accept fraction coming from the first treatment device (101).

## Patentansprüche

1. Entaschungssystem (100) für einen recycelten Faserstoff bzw. Sekundärstoff, das Einrichtungen zum Fraktionieren und Waschen des Sekundärstoffs aufweist, wobei die Einrichtung zum Fraktionieren des Sekundärstoffs eine erste Behandlungseinrichtung (101) aufweist, die den Sekundärstoff in Annahme- und Zurückweisungsanteile teilt, wobei der Annahmeanteil in dem System weitergeleitet wird,
**dadurch gekennzeichnet, dass**
die Einrichtung zum Fraktionieren des Sekundärstoffs des Weiteren eine zweite Behandlungseinrichtung (102) aufweist, zu der der Zurückweisungsanteil geleitet wird, und dass die zweite Behandlungseinrichtung (102) diesen Stoff in Annahme- und Zurückweisungsanteile aufteilt, wobei der Annahmeanteil an eine Wascheinrichtung (72; 106) zum Entfernen von Asche von dem Stoff geleitet wird, und dass der gewaschene Stoff mit dem Annahmeanteil, der von der ersten Behandlungseinrichtung (101) kommt, gemischt wird.

2. Entaschungssystem (100) nach Anspruch 1,
**dadurch gekennzeichnet, dass**
die ersten und zweiten Behandlungseinrichtungen Zentrifugalreiniger sind.

3. Entaschungssystem (100) nach Anspruch 1 oder 2,
**dadurch gekennzeichnet, dass**
die Wascheinrichtung (72; 106) zwei Stoffe bzw. Gewebe aufweist, durch welche die Asche aus dem Stoff entfernt wird, und dass vorzugsweise die Wascheinrichtung eine Doppelsiebwascheinrichtung ist.

4. Entaschungssystem (100) nach einem der Ansprüche 1 bis 3,
**dadurch gekennzeichnet, dass**
von der zweiten Behandlungseinrichtung (102) der Zurückweisungsanteil zu einer dritten Behandlungseinrichtung (103) geleitet wird und der Annahmeanteil der dritten Behandlungseinrichtung (103) zu dem Zufuhrende der zweiten Behandlungseinrichtung (102) oder in Verbindung mit dem Annahmeanteil, der von der zweiten Behandlungseinrichtung (102) kommt, in Richtung der Wascheinrichtung (106) geleitet wird.

5. Entaschungssystem (100) nach einem der Ansprüche 1 bis 4,
**dadurch gekennzeichnet, dass**
das Entaschungssystem (100) des Weiteren zumindest eine vierte Behandlungseinrichtung aufweist.

6. Entaschungssystem (100) nach Anspruch 5,
**dadurch gekennzeichnet, dass**
die dritte und die vierte und mögliche weitere Behandlungseinrichtungen Zentrifugalreiniger sind.

7. Verfahren zum Entaschen eines recycelten Faserstoffs bzw. Sekundärstoffs in einem Entaschungssystem (100), wobei in dem Verfahren ein aus Fasern, Feinstoffen, Sand und Asche gefilterter Stoff und Wasser zu einer Einrichtung zum Fraktionieren des Sekundärstoffs geleitet wird, die eine erste Behandlungseinrichtung (101) aufweist, wobei die erste Behandlungseinrichtung (101) den Sekundärstoff in Annahme- und Zurückweisungsanteile teilt, wobei der Annahmeanteil in dem System weitergeleitet wird,
**dadurch gekennzeichnet, dass**
die Einrichtung zum Fraktionieren des Sekundärstoffs des Weiteren eine zweite Behandlungseinrichtung (102) aufweist, zu der der Zurückweisungsanteil geleitet wird, und wobei die zweite Behandlungseinrichtung (102) diesen Stoff in Annahme- und Zurückweisungsanteile aufteilt, wobei der Annahmeanteil an eine Wascheinrichtung (72;106) zum Entfernen von Asche von dem Stoff geleitet wird, und dass der gewaschene Stoff mit dem Annahmeanteil, der von der ersten Behandlungseinrichtung (101) kommt, gemischt wird.

## Revendications

1. Procédé de décendrage (100) pour stock de fibres recyclées, comprenant un moyen de fractionnement et de lavage du stock de fibres recyclées, le moyen de fractionnement du stock de fibres recyclées comprenant un premier dispositif de traitement (101) qui divise le stock de fibres recyclées en fractions acceptée et rejetée, laquelle fraction acceptée est envoyée dans le système, **caractérisé en ce que** le moyen de fractionnement du stock de fibres recyclées comprend en outre un deuxième dispositif de traitement (102) auquel la fraction rejetée est envoyée, et que le deuxième dispositif de traitement (102) divise ce stock en fractions acceptée et rejetée, laquelle fraction acceptée est envoyée vers un laveur (72; 106) pour éliminer la cendre du stock, et que le stock lavé est mélangé à la fraction acceptée provenant du premier dispositif de traitement (101).

2. Procédé de décendrage (100) selon la revendication 1, **caractérisé en ce que** les premier et deuxième dispositifs de traitement sont des nettoyeurs centrifuges.

3. Procédé de décendrage (100) selon la revendication 1 ou 2, **caractérisé en ce que** le laveur (72,106) comprend deux tissus à travers lesquels la cendre est éliminée du stock et que le laveur est avantageusement un laveur bifilaire.

4. Procédé de décendrage (100) selon l'une quelconque des revendications 1 à 3, **caractérisé en ce que**, depuis le deuxième dispositif de traitement (102), la fraction rejetée est envoyée vers un troisième dispositif de traitement (103) et la fraction acceptée du troisième dispositif de traitement est envoyée vers l'extrémité d'alimentation du deuxième dispositif de traitement (102) ou mise en connexion avec la fraction acceptée provenant du deuxième dispositif de traitement (102) en direction du laveur (106).

5. Procédé de décendrage (100) selon l'une quelconque des revendications 1 à 4, **caractérisé en ce que** le système de décendrage (100) comprend en outre au moins un quatrième dispositif de traitement.

6. Procédé de décendrage (100) selon la revendication 5, **caractérisé en ce que** les troisième et quatrième et éventuels autres dispositifs de traitement sont des nettoyeurs centrifuges.

7. Procédé de décendrage d'un stock de fibres recyclées, dans lequel procédé le stock formé de fibres, de fragments, de sable et de cendre et d'eau est apporté à un moyen de fractionnement du stock de fibres recyclées comprenant un premier dispositif de traitement (101), lequel premier dispositif de traitement (101) divise le stock de fibres recyclées en des fractions acceptée et rejetée, laquelle fraction acceptée est envoyée dans le système, **caractérisé en ce que** le moyen de fractionnement du stock de fibres recyclées comprend en outre un deuxième dispositif de traitement (102) auquel la fraction rejetée est envoyée et lequel deuxième dispositif de traitement (102) divise ce stock en fractions acceptée et rejetée, laquelle fraction acceptée est envoyée vers un laveur (72; 106) pour éliminer la cendre du stock, et **en ce que** le stock lavé est mélangé à la fraction acceptée provenant du premier dispositif de traitement (101).
